(19) Europäisches Patentamt
European Patent Office
Office européen des brevets

(11) Publication number: **0 269 861 B1**

(12) # EUROPEAN PATENT SPECIFICATION

(45) Date of publication of patent specification: **03.08.94**

(51) Int. Cl.5: **C08L 69/00**, C08L 51/00, C08L 33/06, C08L 25/12, C08L 67/02

(21) Application number: **87115848.1**

(22) Date of filing: **28.10.87**

The file contains technical information submitted after the application was filed and not included in this specification

(54) **Impact modified aromatic carbonate compositions.**

(30) Priority: **03.12.86 US 937253**

(43) Date of publication of application: **08.06.88 Bulletin 88/23**

(45) Publication of the grant of the patent: **03.08.94 Bulletin 94/31**

(84) Designated Contracting States: **DE FR GB IT NL**

(56) References cited:
**EP-A- 0 186 826**
**US-A- 4 148 842**

(73) Proprietor: **GENERAL ELECTRIC COMPANY**
**1 River Road**
**Schenectady New York 12305(US)**

(72) Inventor: **Peascoe, Warren Joseph**
**RFD2, Ouiet Knool Road**
**West Stockbridge Massachusetts 01266(US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### BACKGROUND OF THE INVENTION

Aromatic carbonate resins are well known thermoplastic materials which due to their many advantageous properties find use as thermoplastic engineering materials. The aromatic carbonate resins exhibit, for example, excellent properties of toughness, flexibility, and thermal stability, particularly thermal dimensional stability. The aromatic carbonate resins and methods for their preparation are disclosed, inter alia, in U.S. Patent Nos. 2,964,974, 2,999,835, 3,169,121, 3,028, 365, 3,334,154, 3,275,601 and 3,915,926.

However, the impact properties, particularly impact strength, of these aromatic carbonate resins are generally not sufficiently high for certain applications. This is particularly true of their thick section, i.e., one-quarter inch (6.4 mm) and thicker, impact strength.

It is known that the impact properties of polycarbonates can be upgraded by combining the polycarbonate resins with impact modifiers. U.S. Patent No. 4,148,842 to Yu et al. discloses blends of a polycarbonate resin and an interpolymer modifier comprising crosslinked (meth)acrylate, cross-linked styrene-acrylonitrile, and uncrosslinked styrene acrylonitrile. This impact modifier is described in U.S. Patent No. 3,944,631 to Yu et al. as being a three stage impact modifier produced in a three stage polymerization procedure in which in the third stage a cross-linked acrylate/ cross-linked styrene-acrylonitrile polymeric material is used as a reaction ingredient during the polymerization of styrene and acrylonitrile without a crosslinking agent.

It has now been discovered that a two phase material, i.e., a crosslinked acrylate/cross-linked styrene-acrylonitrile, produced by a two stage polymerization procedure, can be utilized as an effective impact modifier for thermoplastic aromatic carbonate resins such as polycarbonates and copolyester-carbonates. The use of this two phase interpolymer comprised of a crosslinked elastomeric acrylate and a crosslinked styrene-acrylonitrile is thus a departure from known techniques described in the prior art. For example, in the aforesaid U.S. Patent Nos. 3,944, 631 and 4,148,842 three stage polymerizations yielding a three phase interpolymer comprised of a crosslinked acrylate/crosslinked styrene-acrylonitrile/uncrosslinked or linear styrene-acrylonitrile, rather than a two stage polymerization yielding a two phase interpolymer followed by a blending step, are advocated.

The fact that the two phase crosslinked acrylate/crosslinked styrene-acrylonitrile interpolymer can be used effectively in aromatic carbonate resins as an impact modifier is generally surprising and unexpected. In order for a material to function as an effective impact modifier for aromatic carbonates it must not only improve the impact properties of these resins, but it must also be compatible with the aromatic carbonate resins, i.e., it must not deleteriously affect the advantageous properties of these resins. Furthermore, it must be readily combinable with aromatic carbonate resin over the range of concentrations which are effective to improve the impact properties of these resins. While some materials act to improve the impact properties of aromatic carbonate resin they do so only at the cost of deleteriously affecting some of the other advantageous properties of aromatic carbonate resins. While other materials function as impact modifiers for aromatic carbonate resins and do not significantly deleteriously affect substantially most of the other advantageous properties of these resins they are not readily combinable with the aromatic carbonate resins. Still other materials need be present in relatively large concentration in order to significantly upgrade the impact properties of aromatic carbonate resins. The area of improving the impact properties of aromatic carbonate resins by blending them with various impact modifiers is thus still an art rather than an exact science wherein the empirical approach is still generally the rule rather than the exception.

Thus, the fact that the instant two phase cross-linked interpolymers function as effective impact modifiers for aromatic carbonate resins, i.e., positively upgrade the impact properties of aromatic carbonate resins at relatively low loadings, are compatible with these resins, and are readily combinable with aromatic carbonate resins, is one which generally could not be predicted and is unexpected.

### FIELD OF THE INVENTION

The instant invention relates to aromatic carbonate resin compositions exhibiting improved impact properties. More particularly, the instant invention relates to aromatic carbonate resin compositions exhibiting improved impact properties comprised of an aromatic carbonate resin and an impact modifier comprised of a two phase interpolymer of a cross-linked polyacrylate/cross-linked styrene-acrylonitrile resin.

## SUMMARY OF THE INVENTION

Thermoplastic aromatic carbonate resin compositions exhibiting improved impact properties are provided by combining a thermoplastic aromatic carbonate resin with an effective amount of an impact modifier which is a two phase interpolymer comprised of a first elastomeric phase of a cross-linked polyacrylate and a second phase comprised of a cross-linked styrene-acrylonitrile. The two phases are joined together by an interpenetrating network of the cross-linked resins with minimal or no grafting therebetween. This two phase interpolymer is substantially free of uncrosslinked styrene-acrylonitrile resin.

## DETAILED DESCRIPTION OF THE INVENTION

The instant compositions are comprised of blends of at least one thermoplastic aromatic carbonate resin and an amount effective to positively upgrade the impact properties, e.g., impact strength, of said resin of a two phase interpolymer comprised of a cross-linked polyacrylate/cross-linked styrene-acrylonitrile which form an interpenetrating network between the two phases.

The aromatic carbonate resins of the instant invention include the polycarbonate resins and the copolyester-carbonate resins. The polycarbonate resins are conventional well known materials which are generally commercially available or may be readily prepared by known methods. These polycarbonates, as well methods for their preparation, are described, inter alia, in U.S. Patent Nos. 3,161,615, 3,220,973, 3,312,659, 3,312,660, 3,313, 777, 3,666,614 and 3,393,672. The polycarbonates may be prepared by a variety of known methods, including the interfacial polymerization process which involves the coreaction of at least one dihydric phenol and a carbonate precursor. The polycarbonate resins contain at least one recurring structural unit represented by the general formula

I. 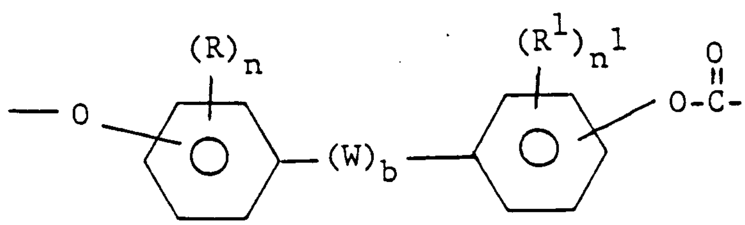

wherein:

R and $R^1$ are independently selected from monovalent hydrocarbon radicals, monovalent hydrocarbonoxy radicals, and halogen radicals;

W is selected from divalent hydrocarbon radicals, -S-, -S-S-, -O-,

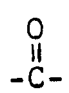, 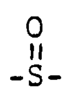 and 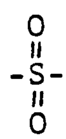;

n and $n^1$ are independently selected from integers having a value of from 0 to 4 inclusive;

and b is either zero or one.

The monovalent hydrocarbon radicals represented by R and $R^1$ include the alkyl, cycloalkyl, aryl, aralkyl and alkaryl radicals. The preferred alkyl radicals are those containing from 1 to about 12 carbon atoms. The preferred cycloalkyl radicals are those containing from about 4 to about 8 ring carbon atoms. The preferred aryl radicals are those containing from 6 to 12 ring carbon atoms, i.e., phenyl, biphenyl, and naphthyl. The preferred aralkyl and alkaryl radicals are those containing from 7 to about 14 carbon atoms.

The preferred halogen radicals represented by R and $R^1$ are chlorine and bromine.

The monovalent hydrocarbonoxy radicals represented by R and $R^1$ may be represented by the formula $-OR^2$ wherein $R^2$ is a monovalent hydrocarbon radical of the type described hereinafore. Preferred hydrocarbonoxy radicals are the alkoxy and aryloxy radicals.

The divalent hydrocarbon radicals represented by W include the alkylene, alkylidene, cycloalkylene, and cycloalkylidene radicals. The preferred alkylene radicals are those containing from 2 to about 20 carbon atoms. The preferred alkylidene radicals are those containing from 1 to about 20 carbon atoms. The

preferred cycloalkylene and cycloalkylidene radicals are those containing from 6 to about 16 ring carbon atoms.

Typically, the dihydric phenols utilized in the preparation of the polycarbonate resins may be represented by the general formula

II. 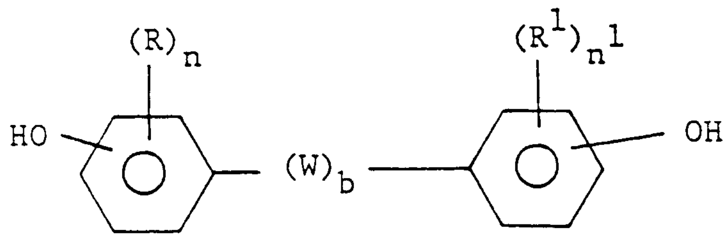

wherein R, $R^1$, n, $n^1$, W and b are as defined hereinafore.

Some illustrative non-limiting examples of dihydric phenols falling within the scope of Formula II include:

2,2-bis(4-hydroxyphenyl)propane (bisphenol-A);
2,2-bis(3,5-dibromo-4-hydroxyphenyl)propane;
2,2-bis(3,5-dimethyl-4-hydroxyphenyl)propane;
2,2-bis(3-bromo-5-methyl-4-hydroxyphenyl)propane;
1,1-bis(4-hydroxyphenyl)cyclohexane;
1,1-bis(4-hydroxyphenyl)cyclododecane;
1,1-bis(3,5-dimethyl-4-hydroxyphenyl)cyclododecane;
1,1-bis(4-hydroxphenyl)decane;
1,4-bis(4-hydroxyphenyl)butane;
bis(4-hydroxyphenyl)methane;
4,4′-thiodiphenol; and
bis(4-hydroxyphenyl)ether.

Other dihydric phenols which are useful are described in U.S. Patent Nos. 2,998,835, 3,028, 365 and 3,334,154.

The carbonate precursor may be a carbonyl halide, a carbonate ester, or a bishaloformate. The carbonyl halides may be carbonyl bromide, carbonyl chloride, or mixtures thereof. The carbonate esters may be diphenyl carbonate; di(halophenyl)carbonates such as di(bromophenyl) carbonate, di(chlorophenyl)-carbonate, and di (tribromophenyl)carbonate; di(alkylphenyl)carbonates such as di(tolyl)carbonate; di-(naphthyl) carbonate; chlorophenyl chloronaphthyl carbonate; and phenyl tolyl carbonate. The bishaloformates that can be used include the bishaloformates of dihydric phenols such as the bischloroformates of bisphenol-A and hydroquinone; and the bishaloformates of glycols such as the bischloroformates of ethylene glycol, neopentyl glycol, and polyethylene glycol. The preferred carbonate precursor is carbonyl chloride, also known as phosgene.

Among the processes used for the preparation of the polycarbonates are the pyridine process, the interfacial polymerization process, transesterification, and melt polymerization. A convenient process for the preparation of the polycarbonate resins is the interfacial polymerization process. This process utilizes two different solvent media which are immiscible. One solvent medium is an aqueous basic medium. The other solvent medium is an organic medium such as methylene chloride which is immiscible with said aqueous medium. Also employed in the interfacial polymerization process are molecular weight regulators which control the chain length or molecular weight of the polycarbonate by a chain terminating mechanism, and catalysts. The molecular weight regulators are well known in the art and include, but are not limited to, phenol itself, p-tertiarybutyl phenol, and chroman-I. The catalysts are also well known in the art and include, but are not limited to, tertiary amines such as triethylamine, quaternary ammonium compounds such as tetraethylammonium bromide, and quaternary phosphonium compounds such as n-butyltriphenyl phosphonium.

Also included within the scope of the term polycarbonates are the randomly branched thermoplastic polycarbonates wherein a branching agent, which is generally a polyfunctional aromatic compound, is reacted with the dihydric phenol and the carbonate percusror. These polyfunctional aromatic compounds are used in minor amounts, i.e., amount effective to provide branching, and contain at least three functional groups which may be carboxy, hydroxyl, carboxylic anhydride, haloformyl, and mixtures thereof. Some illustrative non-limiting examples of these aromatic polyfunctional compounds which may be employed as

branching agents include trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, and benzophenonetetracarboxylic acid.

The copolyester-carbonate resins are well known in the art and are described along with methods for their preparation in U.S. Patent Nos.. 3,169,121, 4,238,596, 4,156,069 and 4,238,597.

Briefly stated the high molecular weight thermoplastic aromatic copolyester-carbonates comprise recurring carbonate groups, carboxylate groups, an aromatic carbocylic groups in the polymer chain in which at least some of the carbonate groups and at least some the the carboxylate groups are bonded directly to the ring carbon atoms of the aromatic carbocyclic groups. These copolyester-carbonates contain ester bonds and carbonate bonds in the chain, wherein the amount of the ester bonds is in the range of from about 25 to about 90 mole percent, preferably from about 35 to about 80 mole percent. For example, 5 moles of bisphenol-A reacting completely with 4 moles of isophthaloyl dichloride and one mole of phosgene would give a copolyester-carbonate of 80 mole percent ester bonds.

These copolyester-carbonates may be readily prepared by the interfacial polymerization process by the reaction of (i) at least one dihydric phenol, (ii) a carbonate percursor, and (iii) an ester precursor. The dihydric phenols and the carbonate precursors are of the type described hereinafore. The ester percursor may be a difunctional carboxylic acid or, preferably, its ester forming reactive derivative such as a acid dihalide, e.g., isophthaloyl dichloride, terephthaloyl dichloride, and mixtures thereof. Some useful disfunctional acids are set forth in U.S. Patent No. 3,169,121,

The impact modifier of the present invention is a two phase interpolymer containing a first elastomeric phase comprised of a crosslinked poly(meth)acrylate and a second phase comprised of a crosslinked styrene-acrylonitrile resin. The two phases are joined and held together, in general, by an interpenetrating network of the crosslinked polyacrylate and the crosslinked styrene-acrylonitrile resin. The integrity of these two phases is generally maintained by the interpenetration and entanglement of the two crosslinked polymeric components rather than by chemical means such as grafting or graftlinking. Thus, the instant two phase interpolymer is substantially free or contains little if any grafting or graftlinking between the two phases.

The instant two phase interpolymer is also free or substantially free of any non-crosslinked or linear styrene-acrylonitrile resin. That is to say, the instant interpolymer does not contain any added linear or non-crosslinked styrene acrylonitrile resin. There is the possibility, in some cases, that very minor amounts of linear or non-crosslinked styrene-acrylonitrile resin may be present due to an incomplete crosslinking reaction. However, in such cases this non-crosslinked styrene-acrylonitrile is present in very minor amounts and as an impurity inherent in the crosslinking process, and not as an intentionally added and essential third phase. This is in sharp contrast to the three phase interpolymer described in U.S. Patent No. 3,944,631 which contains, as the third phase, a non-crosslinked or linear styrene-acrylonitrile resin. The first two phases of this three phase interpolymer are a cross-linked polyacrylate and a crosslinked styrene-acrylonitrile resin, respectively.

The instant two phase interpolymer may be considered as having a structure wherein the first elastomeric crosslinked polyacrylate phase and the second crosslinked styrene-acrylonitrile phase are joined and held together by means of an interpenetrating network. This interpenetrating network through which the integrity of the two phases is maintained is formed when the monomers forming the second crosslinked styrene-acrylonitrile phase are polymerized and crosslinked in the presence of the previously polymerized and crosslinked first phase comprised of a crosslinked polyacrylate resin.

As mentioned previously, the instant two phase interpolymer is thus free or substantially free of any grafting or graftlinking between these two phases and is also free or substantially free of any non-crosslinked or linear styrene-acrylonitrile resin.

These interpolymer compositions may be generally formed by the following type of two-step sequential polymerization process:

1. emulsion polymerizing an acrylate monomer charge (herein designated "acrylate" for the purposes of th present invention) of at least one $C_2$-$C_{10}$ alkyl acrylate, $C_8$-$C_{22}$ alkyl methacrylate, or compatible mixtures thereof, in an aueous polymerization medium in the presence of an effective amount, e.g., from about 0.05 to about 10 percent by weight, of a di- or polyfunctional ethylenically unsaturated crosslinking agent for such types of monomers to form an aqueous latex of crosslinked acrylic elastomeric particles;
2. emulsion polymerizing a charge of styrene and acrylonitrile monomers in an aqueous polymerization medium, also in the presence of an effective amount of a suitable di- or polyfunctional ethylenically unsaturated crosslinking agent, said polymerization being carried out in the presence of the product of step 1 so that the crosslinked acrylic resin and the cross-linked styrene-acrylonitrile components form an interpolymer wherein the respective phases interpenetrate.

Such a two stage polymerization process is analogous to the three stage process described in U.S. Patent 3,944,631 to Yu, except for the fact that this two stage process does not include the critical third stage of Yu which involves adding a monomeric charge of styrene and acrylonitrile which does not contain a crosslinking agent to form a linear non-crosslinked styrene-acrylonitrile polymer. In other respects steps 1 and 2 are the same as described in U.S. Patent 3,944,631.

The acrylic elastomers used in preparing the interpolymer of the instant invention comprise crosslinked acrylic polymers or copolymers having a Tg, i.e., a glass transition temperature, of below about 25 ° C which can be polymerized by means of free radical initiated emulsion techniques. The acrylic elastomers are crosslinked during the polymerization of the elastomer by the inclusion of a polyfunctional ethylenically unsaturated monomer crosslinking agent in the polymerization mixture.

The preferred acrylate monomers are the $C_4$-$C_8$ alkyl acrylate monomers such as n-butyl acrylate, ethyl acrylate, and 2-ethylhexyl acrylate. If desired, the monomer charge may contain small amounts, i.e., 1-20 % by weight of the amount of acrylate monomer, of optional monomers such as styrene, acrylonitrile, methacrylonitrile, methyl methacrylate, methacrylic acid, acrylic acid, vinylidene chloride, vinyl toluene and any other ehthylenically unsaturated monomer copolymerizable with the acrylate monomer selected for use.

It is to be understood that the term "acrylate" and "acrylic" as used herein includes both the acrylates, i.e., alkyl acrylates, and methacrylates, i.e., alkyl methacrylates.

This interpolymer of the present invention generally comprises from about 40 to about 90 percent by weight of at least one of the crosslinked acrylates, and from about 10 to about 60 percent by weight of said crosslinked styrene-acrylonitrile. Preferably the interpolymer will comprise from about 50 to about 80 weight percent of said crosslinked acrylate and from about 20 to about 50 weight percent of said crosslinked styrene-acrylonitrile. Weight percent is calculated based on the total amounts of said crosslinked poly-(meth)acrylate resin and said crosslinked styrene-acrylonitrile resin present in the interpolymer.

In contradistinction to the three phase interpolymer described in U.S. Patent 3,944,631, the instant two phase interpolymer does not contain, as discussed hereinafore, they added non-crosslinked styrene-acrylonitrile copolymer which is obtained by the polymerization of styrene and acrylonitrile monomers in the absence of a crosslinking agent. The phrase "free or substantially free" of any non-crosslinked or linear styrene-acrylonitrile thus means that the instant compositions do not intentionally contain any non-crosslinked styrene-acrylonitrile as a third phase or component of the instant two phase interpolymer. Any non-crosslinked styrene-acrylonitrile present is present in very minor amounts as an impurity resulting from any incomplete crosslinking in the crosslinking reaction of this second phase.

The amount of the instant two phase impact modifier present in the instant compositions is an amount which is effective to improve, i.e., positively upgrade, the impact properties, particularly the impact strength, of the instant aromatic carbonate resins. Generally, this amount is from about 1 to about 30 weight percent, preferably from about 3 to about 25 weight percent, and more preferably from about 4 to about 15 weight percent. Weight percent of impact modifier is calculated based on the total amounts of impact modifier and aromatic carbonate resin present in the compositions.

Generally, if less than about 1 weight percent of impact modifier is contained in the instant compositions there will be no appreciable improvement in the impact properties of the aromatic carbonate resin. In general, if the instant compositions contain in excess of about 30 weight percent of said impact modifier then some of the advantageous mechanical and physical properties of the aromatic carbonate resin will be significantly adversely affected, i.e., the composition will begin to loose some of the advantageous physical properties imparted thereto by the aromatic carbonate resins. Thus, the instant compositions contain an amount of impact modifier effective to improve the impact properties of said resin but insufficient to significantly adversely affect, to a substantial degree, substantially most of the advantageous properties of the aromatic carbonate resin.

The aromatic carbonate resin and the impact modifier may be admixed or the instant compositions compounded by any of the known conventional means. Thus, for example, the carbonate resin and the impact modifier can be physical admixed to form a mixture and the mixture can be then be extruded. Alternately, the two components can be fed to an extruder simultaneously.

The compositions of the instant invention may also optionally contain other commonly known and used additives for aromatic carbonate resins. These include antioxidants; impact modifiers other than those described herein which are used in conjunction with the instant impact modifiers; mold release agents; ultraviolet radiation stabilizers or absorbers; hydrolytic stabilizers such as the epoxides disclosed in U.S. Patent Nos. 3,489,716, 4,138,379 and 3,839,247; color stabilizers such as the organophosphites disclosed in U.S. Patent Nos. 3,305,520 and 4,118,370; and flame retardants. Some useful flame retardants are the alkali and alkaline earth metal salts described, inter alia, in U.S. Patents Nos. 3,933,734, 3,948,851, 3,926,908, 3,919,167, 3,909,490, 4,953,396, 3,931,100, 3,978,024, 3,953,399, 3,917,559, 3,951,910 and 3,940,366.

## PREFERRED EMBODIMENT OF THE INVENTION

The following examples are set forth to more fully and clearly illustrate the present invention. The examples are intended to be considered as illustrative. In the examples all parts and percentages are on a weight basis unless otherwise indicated.

The following example illustrates the preparation of the two phase crosslinked acrylate/crosslinked styrene-acrylonitrile interpolymer of the instant invention.

## EXAMPLE 1

A 7,500 liter stainless steel reactor was charged with 5,488 liters of deionized water. With the agitator set at 55 rpm, the following ingredients were charged in order of their listing:

| Ingredient | Amount |
| --- | --- |
| Sodium lauryl sulfate emulsifier solution (30 wt. percent active) | 15.77 kg. |
| Disodium monodecyl sulfosuccinate emulsifier solution (50 wt. % active) | 31.81 kg. |
| Sodium bisulfite buffer | 2.09 kg. |
| in deionized water | 6.1 liters |
| n-butyl acrylate monomer premixed with | 1,112 kg. |
| butylene glycol diacrylate crosslinker | 1.89 kg. |

The reactor was purged of air by alternately pressuring the reactor to 0,703 kg/cm$^2$ with nitrogen and then venting to 0.141 kg/cm$^2$. This purge cycle was repeated three times. The reactor was heated to 54.4 °C. At this point 2.09 kg. of ammonium persulfate in 6.1 liters of deionized water was added. The batch temperature was held close to 54.4 °C. by an automatic temperature control system supplying cooling to the reactor jacket. The batch was allowed to react for 2 hours. During the peak reaction rate the batch temperature rose briefly to 56.7 °C. in spite of jacket cooling.

At the end of the 2 hour reaction time the following ingredients were charged:

| Ingredients | Amount |
|---|---|
| N-butyl acrylate monomer premixed with | 4,458 kg. |
| Butylene glycol diacrylate crosslinker | 7.58 kg. |
| Ammonium persulfate initiator | 5.70 kg. |
| in deionized water | 11.4 liters |
| Sodium bisulfite buffer in | 2.25 kg. |
| deionized water | 3.8 liters |

The reactor was then purged by alternately pressurizing to 0.703 kg/cm$^2$ with nitrogen and venting to 0.141 kg/cm$^2$ three times. The batch was allowed react for an additional 3.25 hours with the temperature control system set at 54.4 °C. During the peak reaction rate the batch temperature rose momentarily to 68 °C. in spite of the jacket cooling.

At the end of the 3.25 hour reaction time the following premixed solution was charged into the reactor with the agitator turned off:

| Ingredients | Amount |
|---|---|
| Styrene monomer | 1357 kg. |
| Acrylonitrile monomer | 500 kg. |
| Divinyl benzene (55 wt % active) | 19.63 kg. |

After charging the above solution agitation was resumed at 55 rpm. The batch was allowed to react for 3.3 hours at 54.4 °C.

At the end of the 3.5 hour reaction period, 1.5 kg of ascorbic acid in 11.4 liters of deionized water was added. The batch was then cooled and transferred through a strainer.

To the strained material there was added methanol (equal parts by weight of methanol) and 0.5 wt % of calcium chloride. The resultant coagulum was filtered, washed with water, and dried in a vacuum oven.

The following example illustrates a composition falling outside the scope of the present invention. This example is presented for comparative purposes only.

EXAMPLE 2

To 100 parts by weight of an aromatic polycarbonate resin (derived from bisphenol-A and phosgene - LEXAN ® resin, grade 141, sold by the General Electric Company) there are added 0.05 part by weight of a first organophosphite color stabilizer (Ultranox 626 marketed by Argus Chemical Corp.), 0.025 part by weight of a second organophosphite color stabilizer (Weston 618 marketed by Borg-Warner Chemical Co.), 0.1 part by weight of a first hindered phenol thermal stabilizer (Irganox 1076 marketed by Ciba-Geigy Corp.), and 0.025 part by weight of a second hindered phenol thermal stabilizer (Irganox 1010 marketed by the Ciba-Geigy Corp.) The resultant mixture is extruded on a single screw extruded and molded into sample parts 3,175 mm (1/8") and 6,35 mm (1/4") thickness. These test samples are subjected to the notched Izod impact strength test performed in accordance with ASTM D-256. The 3,175 mm (1/8") thick samples exhibited a notched Izod impact strength of 8,32 J/cm (15.4 ft-lb/in) while the 6,35 mm (1/4") thick samples exhibited a notched Izod impact strength of 1,18 J/cm (2.2 ft-lb/in).

The following example illustrates a composition of the instant invention.

EXAMPLE 3

To 100 parts by weight of an aromatic polycarbonate resin of the type of Example 2 there are added 5 parts by weight of the two phase interpolymer Prepared substantially in accordance with the procedure of Example 1, 0.05 part by weight of an organophosphite color stabilizer (Ultranox 626), and 0.1 part by weight of a hindered phenol thermal stabilizer (Irganox 1076). The resultant mixture is extruded on a single screw extruder and molded into sample parts of 3,175 mm (1/8") and 6,35 mm (1/4") Thickness. These samples are subjected to the notched Izod impact strength test. The 3,175 mm (1/8") sample exhibited a notched Izod impact strength of 7,94 J/cm (14.7 ft-lb/in) while the 6,35 mm (1/4") samples exhibited a notched Izod impact strength of 7,24 J/cm (13.4 ft-lb/in).

As illustrated by the data in Examples 2 and 3 the instant compositions exhibit a much improved impact strength in thick sections, i.e., 6,35 mm (1/4") thickness. This is quite important for polycarbonate resins as they suffer from low critical thickness values, i.e., the thickness at which a discontinuity in Izod impact values occurs. These low critical thickness values tend to limit wall thickness of molded articles to a thickness below the critical thickness. The polycarbonates thus exhibit notched Izod impact values which are dependent on the thickness of the resin article. Thus, for example, as illustrated by the data in Example 2, while typical notched Izod impact values of 3,175 mm (one-eighth inch) thick polycarbonate test specimens are generally in the neighborhood of about 8,1 J/cm (15 foot pounds per inch), typical notched Izod impact values for a 6,35 mm (one-quarter inch) thick polycarbonate test specimen are generally in the range of about 1,08 J/cm (2 foot pounds per inch). The relatively high Izod values of 3,175 mm (one-eighth inch) thick polycarbonate test specimens are due to the fact that these specimens are thinner than the critical thickness of the polymer and, therefore, upon impact a hinged or ductile break occurs. The low Izod impact values of the 6,35 mm (one-fourth inch) thick polycarbonate test specimens are due to the fact that these specimens exceed the critical thickness of the polymer and, therefore, upon impact a clean or brittle break occurs.

The present compositions allow polycarbonate articles having thick wall sections exhibiting good impact strengths to be prepared e.g., molded articles having a thickness exceeding 6,35 mm (1/4").

## Claims

1. An aromatic carbonate resin composition substantially free of a non-crosslinked or linear styrene-acrylonitrile exhibiting improved impact properties comprised of:
   (i) at least one thermoplastic aromatic carbonate resin; and
   (ii) an amount effective to improve the impact properties of said resin of at least one interpolymer of a crosslinked acrylate and a crosslinked styrene-acrylonitrile.

2. The composition of claim 1 wherein said crosslinked acrylate is comprised of the polymerized and crosslinked reaction products of at least one alkyl acrylate monomer, at least one alkyl methacrylate monomer, or mixtures thereof.

3. The composition of claim 2 wherein said alkyl acrylate monomer is selected from $C_2$-$C_{10}$ alkyl acrylate monomers.

4. The composition of claim 3 wherein said alkyl acrylate monomer is selected from $C_4$-$C_8$ alkyl acrylate monomer.

5. The composition of claim 4 wherein said alkyl acrylate monomer is the butyl acrylate monomer.

6. The composition of claim 2 wherein said alkyl methacrylate monomer is selected from $C_8$-$C_{22}$ alkyl methacrylate monomers.

7. The composition of claim 1 wherein said interpolymer is comprised of from 40 to 90 weight percent of said cross linked acrylate and from 10 to 60 weight percent of said crosslinked styrene-acrylonitrile.

8. The composition of claim 7 wherein said interpolymer is comprised of from 50 to 80 weight percent of said crosslinked acrylate and from 20 to 50 weight percent of said crosslinked styrene-acrylonitrile.

9. The composition of claim 8 wherein said cross linked acrylate is comprised of the polymerized and crosslinked reaction products of at least one $C_4$-$C_8$ alkyl acrylate.

10. The composition of claim 9 wherein said alkyl acrylate is butyl acrylate.

11. The composition of claim 1 which contains from 1 to 30 weight percent of said interpolymer.

12. The composition of claim 11 which contains from 3 to 25 weight percent of said interpolymer.

13. The composition of claim 12 which contains from 4 to 15 weight percent of said interpolymer.

14. The composition of claim 1 wherein said aromatic carbonate resin is a polycarbonate resin.

15. The composition of claim 1 wherein said aromatic carbonate resin is a copolyester-carbonate resin.

16. An aromatic carbonate resin composition exhibiting improved impact properties comprising:
(i) at least one thermoplastic aromatic carbonate resin; and
(ii) an amount effective to improve the impact properties of said resin of a two phase interpolymer substantially free of non-crosslinked or linear styrene-acrylonitrile comprised of a first phase of a cross linked acrylate and a second phase of a crosslinked styrene-acrylonitrile, said first phase and said second phase being joined together by an interpenetrating network of said crosslinked acrylate and said crosslinked styrene-acrylonitrile.

17. The composition of claim 16 wherein said two phase interpolymer is obtained by a two stage polymerization process comprising first emulsion polymerizing at least one alkyl acrylate, alkyl methacrylate, or a mixture of at least one alkyl acrylate and at least one alkyl methacrylate in the presence of a crosslinking agent and then emulsion polymerizing, in the presence of said crosslinked acrylate and a crosslinking agent, a styrene monomer and an acrylonitrile.

18. The composition of claim 17 wherein said interpolymer is comprised of from 40 to 90 weight percent of said crosslinked acrylate and from 10 to 60 weight percent of said crosslinked styrene-acrylonitrile.

19. The composition of claim 18 wherein said interpolymer is comprised of from 50 to 80 weight percent of said cross linked acrylate and from 20 to 50 weight percent of said crosslinked styrene-acrylonitrile.

20. The composition of claim 17 which contains from 1 to 30 weight percent of said interpolymer.

21. The composition of claim 20 which contains from 3 to 25 weight percent of said interpolymer.

22. The composition of claim 21 which contains from 4 to 15 weight percent of said interpolymer.

23. The composition of claim 17 wherein said alkyl acrylate is a $C_2$-$C_{10}$ alkyl acrylate.

24. The composition of claim 24 wherein said alkyl acrylate is a $C_4$-$C_8$ alkyl acrylate.

25. The composition of claim 24 wherein said alkyl acrylate is butyl acrylate.

26. The composition of claim 17 wherein said alkyl methacrylate is a $C_8$-$C_{22}$ alkyl methacrylate.

27. The composition of claim 16 wherein said aromatic carbonate resin is a polycarbonate resin.

28. The composition of claim 16 wherein said aromatic carbonate resin is a copolyester-carbonate resin.

29. A process for improving the impact properties of an aromatic carbonate resin comprising blending said aromatic carbonate resin with an amount effective to improve the impact properties thereof of a preformed two phase interpolymer substantially free of non-crosslinked or linear styrene-acrylonitrile comprised of a crosslinked polyacrylate first phase comprised of the polymerized and crosslinked reaction products of at least one $C_2$-$C_{10}$ alkyl acrylate monomer, at least one $C_8$-$C_{22}$ alkyl methacrylate

monomer; or mixtures thereof, and a crosslinked styrene-acrylonitrile second phase, said interpolymer being formed by a two stage polymerization process.

**30.** The process of claim 29 wherein said alkyl acrylate monomer is a $C_4$-$C_8$ alkyl acrylate.

**31.** The process of claim 30 wherein said alkyl acrylate monomer is butyl acrylate.

**32.** The process of claim 29 wherein said interpolymer is comprised of from 40 to 90 weight percent of said crosslinked polyacrylate first phase and from 10 to 60 weight percent of said crosslinked styrene-acrylonitrile second phase.

**33.** The process of claim 32 wherein said interpolymer is comprised of from 50 to 80 weight percent of said crosslinked polyacrylate first phase and from 20 to 50 weight percent of said crosslinked styrene-acrylonitrile second phase.

**34.** The process of claim 29 which comprises blending from 1 to 30 weight percent of said interpolymer with said resin.

**35.** The process of claim 34 which comprises blending from 3 to 25 weight percent of said interpolymer with said resin.

**36.** The process of claim 35 which comprises blending from 4 to 15 weight percent of said interpolymer with said resin.

**37.** The process of claim 29 wherein said aromatic carbonate resin is a polycarbonate resin.

**38.** The process of claim 29 wherein said aromatic carbonate resin is a copolyester-carbonate resin.

## Patentansprüche

**1.** Aromatische Karbonatharz-Zusammensetzung, die im wesentlichen frei ist von einem nicht vernetzten oder linearen Styrol-Acrylnitril, welche verbesserte Schlageigenschaften aufweist und enthält:
(i) wenigstens ein thermoplastisches aromatisches Karbonatharz, und
(ii) eine Menge zur wirksamen Verbesserung der Schlagfestigkeitseigenschaften des besagten Harzes von wenigstens einem Interpolymer eines vernetzten Acrylats und eines vernetzten Styrol-Acrylnitrils.

**2.** Zusammensetzung nach Anspruch 1, worin das vernetzte Acrylat die polymerisierten und vernetzten Reaktionsprodukte von wenigstens einem Alkyl-Acrylat- Monomer, wenigstens einem Alkyl-Methacrylat -Monomer oder Mischungen derselben enthält.

**3.** Zusammensetzung nach Anspruch 2, worin das Alkyl-Acrylat-Monomer ausgewählt ist aus $C_2$ - $C_{10}$ Alkyl-Acrylat-Monomeren.

**4.** Zusammensetzung nach Anspruch 3, worin das Alkyl-Acrylat-Monomer ausgewählt ist aus $C_4$- $C_8$ Alkyl-Acrylat-Monomer.

**5.** Zusammensetzung nach Anspruch 4, worin das Alkyl-Acrylat-Monomer das Butyl-Acrylat-Monomer ist.

**6.** Zusammensetzung nach Anspruch 2, worin das Alkyl-Methacrylat Monomer ausgewählt ist, aus $C_8$ - $C_{22}$ -Alkyl-Methacrylat-Monomeren.

**7.** Zusammensetzung nach Anspruch 1, worin das Interpolymer 40 bis 90 Gewichtsprozent des vernetzten Acrylates und 10 bis 60 Gewichtsprozent des vernetzten Styrol-Acrylnitrils enthält.

**8.** Zusammensetzung nach Anspruch 7, worin das Interpolymer 50 bis 80 Gewichtsprozent des vernetzten Acrylats und 20 bis 50 Gewichtsprozent des vernetzten Styrol-Acrylnitrils unfaßt.

**9.** Zusammensetzung nach Anspruch 8, worin das vernetzte Acrylat die polimierisierten und vernetzten Reaktionsprodukte von wenigstens einem $C_4$-$C_8$ Alkyl-Acrylat umfaßt.

**10.** Zusammensetzung nach Anspruch 9, worin das Alkylacrylat Butylacrylat ist.

**11.** Zusammensetzung nach Anspruch 1, die 1 bis 30 Gewichtsprozent des Interpolymeren umfaßt.

**12.** Zusammensetzung nach Anspruch 11, die 3 bis 25 Gewichtsprozent des Interpolymeren umfaßt.

**13.** Zusammensetzung nach Anspruch 12, die 4 bis 15 Gewichtsprozent des Interpolymeren umfaßt.

**14.** Zusammensetzung nach Anspruch 1, worin das aromatische Karbonatharz ein Polycarbonatharz ist.

**15.** Zusammensetzung nach Anspruch 1, worin das aromatische Karbonatharz ein Copolyester-Karbonatharz ist.

**16.** Einearomatische Karbonatharzzusammensetzung, die verbesserte Schlagfestigkeitseigenschaften aufweist, und welche umfaßt
(i) wenigstens ein thermoplastisches, aromatisches Karbonatharz und
(ii) eine wirksame Menge zur Verbesserung der Schlagfestigkeitseigenschaften des Herzes aus einem 2-Phasen-Interpolymer, das im wesentlichen frei ist von nicht vernetztem oder linearem Styrol-Acryl-Nitril und eine erste Phase aus einem vernetzten Acrylat und eine zweite Phase aus einem vernetzten Styrol-Acryl-Nitril umfaßt, wobei die erste Phase und die zweite Phase durch ein durchdringendes Netzwerk aus dem vernetzten Acrylat und dem vernetzten Styrol -Akryl-Nitril miteinander verbunden sind.

**17.** Zusammensetzung nach Anspruch 16, worin die beiden Interpolymerphasen durch einen 2-Stufen-Polymerisationsprozeß gehalten werden, der eine erste Emulsions-Polimerisation von wenigstems einem Alkyl-Acrylat, Alkyl-Methacrylat, oder einer Mischung von wenigstens einem Alkylacrylat und wenigstens einem Alkylmethacrylat, in Anwesenheit eines vernetzenden Mittels und anschliessende Emulsionspolimerisation in Anwesenheit des vernetzten Acrylats und eines vernetzenden Mittels eines Styrol-Monomeren und eines Acryl- Nitrils umfaßt.

**18.** Zusammensetzung nach Anspruch 17, worin das Interpolymer 40 bis 90 Gewichtsprozent des vernetzten Acrylats und 10 bis 60 Gewichtsprozent des vernetzten Styrol-Acryl-Nitrils umfaßt.

**19.** Zusammensetzung nach Anspruch 18 , worin das Interpolymer 50 bis 80 Gewichtsprozent des vernetzten Acrylats und 20 bis 50 Gewichtsprozent des vernetzten Styrol-Acryl-Nitrils umfaßt.

**20.** Zusammensetzung nach Anspruch 17, die 1 bis 30 Gewichtsprozent des Interpolymeren enthält.

**21.** Zusammensetzung nach Anspruch 20, die 3 bis 25 Gewichtsprozent des Interpolimeren enthält.

**22.** Zusammensetzung nach Anspruch 21, die 4 bis 15 Gewichtsprozent des Interpolimeren enthält.

**23.** Zusammensetzung nach Anspruch 17, worin das Alkyl-Acrylat ein $C_2$-$C_{10}$- Alkyl-Acrylat ist.

**24.** Zusammensetzung nach Anspruch 23, worin das Alkyl-Acrylat ein $C_4$-$C_8$- Alkyl-Acrylat ist.

**25.** Zusammensetzung nach Anspruch 24, worin das Alkyl-Acrylat Butyl-Acrylat ist.

**26.** Zusammensetzung nach Anspruch 17, worin das Alkyl-Methacrylat ein $C_8$-$C_{22}$- Alkyl-Methacrylat ist.

**27.** Zusammensetzung nach Anspruch 16, wobei das aromatische Karbonatharz ein Polykarbonat-Harz ist.

**28.** Zusammensetzung nach Anspruch 16, wobei das aromatische Karbonatharz ein Copolyester-Karbonatharz ist.

**29.** Verfahren zur Verbesserung der Schlagfestigkeitseigenschaften eines aromatischen Karbonatharzes, umfassend das Mischen des aromatischen Karbonatharzes mit einer Menge, die wirksam ist zur Verbesserung der Schlagfestigkeitseigenschaften derselben aus einem vorgeformten Zweiphasen-Interpolymer, welches im wesentlichen frei ist von nichtvernetztem oder linearem Styrol-Acryl-Nitril, umfassend die polymerisierten und vernetzten Reaktionsprodukte von wenigstens einem $C_2$ - $C_{10}$-Alkyl-Arylat-Monomeren, wenigstens einem $C_8$- $C_{22}$-Alkyl-Metha rylat-Monomeren oder Mischungen derselben und eine zweite vernetzte Styrol-Acrylnitril Phase, wobei das Interpolymer durchein Zweistufen-Polimerisationsverfahren gebildet wird.

**30.** Verfahren nach Anspuch 29, worin das Alkyl-Acrylat-Monomer ein $C_4$ - $C_8$ -Alkyl-Acrylat ist.

**31.** Verfahren nach Anspruch 30, worin das Alkyl-Acrylat-Monomer Butyl-Acrylat ist.

**32.** Verfahren nach Anspruch 29, worin das Interpolymer 40 bis 90 Gewichtsprozent des vernetzten Polyacrylats der ersten Phase und 10 bis 60 Gewichtsprozent des vernetzten Styrol-Acrylnitrils der zweiten Phase enthält.

**33.** Verfahren nach Anspruch 32, worin-das Interpolymer 50 - etwa 80 Gew.-% des vernetzten Polyacrylats erster Phase und 20 - 50 Gewichtsprozent des vernetzten Styrol-Acrylnitrils zweiter Phase enthält.

**34.** Verfahren nach Anspruch 29, welches das Mischen von 1 bis 30 Gewichtsprozent des Interpolymeren mit dem Harz umfaßt.

**35.** Verfahren nach Anspruch 34, welches das Mischen von 3 bis 25 Gewichtsprozent des Interpolymeren mit dem Harz umfaßt.

**36.** Verfahren nach Anspruch 35, welches das Mischen von 4 bis 15 Gewichtsprozent des Interpolymeren mit dem Harz umfaßt.

**37.** Verfahren nach Anspruch 29, worin das aromatische Karbonatharz ein Polycarbonatharz ist.

**38.** Verfahren nach Anspruch 29, worin das aromatische Karbonatharz ein Copolyesterkarbonatharz ist.

**Revendications**

**1.** Composition de résine carbonate aromatique presque totalement exempte de copolymère styrène-acrylonitrile linéaire ou non réticulé, présentant des propriétés améliorées de résistance au choc, contenant :

(i) au moins une résine carbonate aromatique thermoplastique, et

(ii) une quantité suffisante pour améliorer les propriétés de résistance au choc de ladite résine d'au moins un interpolymère de polyacrylate réticulé et de copolymère styrène-acrylonitrile réticulé.

**2.** Composition conforme à la revendication 1, dans laquelle ledit polyacrylate réticulé contient les produits de réaction polymérisés et réticulés d'au moins un monomère acrylate d'alkyle, au moins un monomère méthacrylate d'alkyle ou des mélanges de ceux-ci.

**3.** Composition conforme à la revendication 2, dans laquelle ledit monomère acrylate d'alkyle est choisi parmi les monomères acrylate d'alkyle en $C_2$-$C_{10}$.

**4.** Composition conforme à la revendication 3, dans laquelle ledit monomère acrylate d'alkyle est choisi parmi les monomères acrylate d'alkyle en $C_4$-$C_8$.

**5.** Composition conforme à la revendication 4, dans laquelle ledit monomère acrylate d'alkyle est le monomère acrylate de butyle.

**6.** Composition conforme à la revendication 2, dans laquelle ledit monomère méthacrylate d'alkyle est choisi parmi les monomères méthacrylate d'alkyle en $C_8$-$C_{22}$.

**7.** Composition conforme à la revendication 1, dans laquelle ledit interpolymère est constitué de 40 à 90 % en poids dudit polyacrylate réticulé et de 10 à 60 % en poids dudit copolymère styrène-acrylonitrile réticulé.

**8.** Composition conforme à la revendication 7, dans laquelle ledit interpolymère est constitué de 50 à 80% en poids dudit polyacrylate réticulé et de 20 à 50 % en poids dudit copolymère styrène-acrylonitrile réticulé.

**9.** Composition conforme à la revendication 8, dans laquelle ledit polyacrylate réticulé est constitué des produits de réaction polymérisés et réticulés d'au moins un acrylate d'alkyle en $C_4$-$C_8$.

**10.** Composition conforme à la revendication 9, dans laquelle ledit acrylate d'alkyle est l'acrylate de butyle.

**11.** Composition conforme à la revendication 1, contenant entre 1 et 30 % en poids dudit interpolymère.

**12.** Composition conforme à la revendication 11, contenant entre 3 et 25 % en poids dudit interpolymère.

**13.** Composition conforme à la revendication 12, contenant entre 4 et 15 % en poids dudit interpolymère.

**14.** Composition conforme à la revendication 1, dans laquelle ladite résiste carbonate aromatique est une résiste de polycarbonates.

**15.** Composition conforme à la revendication 1, dans laquelle ladite résine carbonate aromatique est une résine copolymère polyester-polycarbonate.

**16.** Composition de résine carbonate aromatique présentant des propriétés améliorées de résistance au choc contenant :

(i) au moins une résine carbonate aromatique thermoplastique, et

(ii) une quantité suffisante pour améliorer les propriétés de résistance au choc de ladite résine, d'un interpolymère à deux phases presque totalement exempt de copolymère styrène-acrylonitrile linéaire ou non réticulé, composé d'une première phase de polyacrylate réticulé et d'une seconde phase de copolymère styrène-acrylonitrile réticulé, ladite première phase et ladite seconde phase étant combinées par un réseau d'interpénétrations desdits polyacrylate réticulé et copolymère styrène-acrylonitrile réticulé.

**17.** Composition conforme à la revendication 16, dans laquelle l'interpolymère à deux phases est obtenu par un procédé de polymérisation en deux étapes comprenant une première polymérisation en émulsion d'au moins un acrylate d'alkyle, méthacrylate d'alkyle ou d'un mélange d'au moins un acrylate d'alkyle et méthacrylate d'alkyle en présence d'un agent de réticulation et ensuite une polymérisation en émulsion en présence dudit polyacrylate réticulé et d'un agent de réticulation.

**18.** Composition conforme à la revendication 17, dans laquelle ledit interpolymère est constitué de 40 à 90 % en poids dudit polyacrylate réticulé et de 10 à 60 % en poids dudit copolymère styrène-acrylonitrile réticulé.

**19.** Composition conforme à la revendication 18, dans laquelle ledit interpolymère est constitué de 50 à 80 % en poids dudit polyacrylate réticulé et de 20 à 50 % dudit copolymère styrène-acrylonitrile réticulé.

**20.** Composition conforme à la revendication 17 contenant entre 1 et 30 % en poids dudit interpolymère.

**21.** Composition conforme à la revendication 20 contenant entre 3 et 25 % en poids dudit interpolymère.

**22.** Composition conforme à la revendication 21, contenant entre 4 et 15 % dudit interpolymère

**23.** Composition conforme à la revendication 17, dans laquelle ledit acrylate d'alkyle est un acrylate d'alkyle en $C_2$-$C_{10}$.

**24.** Composition conforme à la revendication 23 dans laquelle ledit acrylate d'alkyle est un acrylate d'alkyle en $C_4$-$C_8$.

**25.** Composition conforme à la revendication 24, dans laquelle ledit acrylate d'alkyle est l'acrylate de butyle.

**26.** Composition conforme à la revendication 17, dans laquelle ledit méthacrylate d'alkyle est un méthacrylate d'alkyle en $C_8$-$C_{22}$.

**27.** Composition conforme à la revendication 16, dans laquelle ladite résine carbonate aromatique est une résine de polycarbonates.

**28.** Composition conforme à la revendication 16, dans laquelle ladite résine carbonate aromatique est une résine copolymère polyester-polycarbonate.

**29.** Procédé d'amélioration des propriétés de résistance au choc d'une résine carbonate aromatique comprenant le mélange de ladite résine carbonate aromatique avec une quantité suffisante pour améliorer ses propriétés de résistance au choc, d'un interpolymère à deux phases, préformé, presque totalement exempt de copolymère styrène-acrylonitrile linéaire ou non réticulé, constitué d'une première phase de polyacrylate réticulé, composée du produit de réaction polymérisé et réticulé d'au moins un monomère acrylate d'alkyle en $C_2$-$C_{10}$, au moins un monomère méthacrylate d'alkyle en $C_8$-$C_{22}$, ou un mélange de ceux-ci, et d'une seconde phase de copolymère styrène-acrylonitrile réticulé, ledit interpolymère étant préparé par un procédé de polymérisation à deux étapes.

**30.** Procédé conforme à la revendication 29, dans lequel ledit monomère acrylate d'alkyle est un acrylate d'alkyle en $C_4$-$C_8$.

**31.** Procédé conforme à la revendication 30, dans lequel ledit monomère acrylate d'alkyle est l'acrylate de butyle.

**32.** Procédé conforme à la revendication 29, dans lequel ledit interpolymère est constitué de 40 à 90 % en poids de ladite première phase de polyacrylate réticulé et de 10 à 60 % en poids de ladite deuxième phase de copolymère styrène-acrylonitrile réticulé.

**33.** Procédé conforme à la revendication 32, dans lequel ledit interpolymère est constitué de 50 à 80 % en poids de ladite première phase de polyacrylate réticulé et de 20 à 50 % en poids de ladite deuxième phase de copolymère styrène-acrylonitrile réticulé.

**34.** Procédé conforme à la revendication 29 comprenant le mélange de 1 à 30 % en poids dudit interpolymère avec ladite résine.

**35.** Procédé conforme à la revendication 34 comprenant un mélange de 3 à 25 % en poids dudit interpolymère avec ladite résine.

**36.** Procédé conforme à la revendication 35 comprenant le mélange de 4 à 15 % en poids dudit interpolymère avec ladite résine.

**37.** Procédé conforme à la revendication 29, dans laquelle ladite résine carbonate aromatique est une résine de polycarbonates.

**38.** Procédé conforme à la revendication 29, dans laquelle ladite résine carbonate aromatique est une résine copolymère polyester-polycarbonate.